# EUROPÄISCHE PATENTSCHRIFT

(11) **EP 3 691 874 B1**
(45) Veröffentlichungstag und Bekanntmachung des Hinweises auf die Patenterteilung: **31.05.2023**
(21) Anmeldenummer: 18779635.4
(22) Anmeldetag: 27.09.2018
(51) Int. Cl.: B29C 65/08, B29C 65/56, B62D 1/16, B62D 1/185, B62D 1/20, F16C 3/035, F16C 33/20, F16D 3/06, F16D 3/38

(54) **VERFAHREN ZUR HERSTELLUNG VON BAUGRUPPEN MIT AXIAL VERSCHIEBBAREN BAUTEILEN**
METHOD FOR PRODUCING UNITS WITH AXIALLY MOVABLE COMPONENTS
PROCÉDÉ DE FABRICATION DE SOUS-ENSEMBLES COMPRENANT DES ÉLÉMENTS COULISSANT AXIALEMENT

(30) Priorität: 05.10.2017 DE 102017123161
(43) Veröffentlichungstag der Anmeldung: 12.08.2020
(73) Patentinhaber: thyssenkrupp Presta AG, 9492 Eschen (LI); thyssenkrupp AG, 45143 Essen (DE)
(72) Erfinder: HIRSCHAUER, Peter, 6805 Feldkirch (AT)
(74) Vertreter: thyssenkrupp Intellectual Property GmbH
(86) Internationale Anmeldenummer: PCT/EP2018/076237
(87) Internationale Veröffentlichungsnummer: WO 2019/068545

(56) Entgegenhaltungen:
- WO-A1-2009/090018
- CN-U- 203 996 397
- DE-A1-102015 216 326
- US-A1- 2014 041 194

## Beschreibung

Die vorliegende Erfindung betrifft ein Verfahren zur Herstellung einer axial verschieblichen Verbindung zwischen zwei Wellenteilen.

Schiebeverbindungen für zueinander verschiebbare Wellenteile wie z. B. koaxiale, zueinander teleskopierbare Rohre oder Wellen, die drehfest ineinander eingesetzt und teleskopierbar sind, kommen in verschiedenen Gebieten der Technik zum Einsatz. Die Schiebeverbindung soll im Allgemeinen reibungsarm, spielfrei und mechanisch belastbar sein. Insbesondere bei Kraftfahrzeuglenkungen kommen solche teleskopierbaren Verbindungen an verschiedenen Stellen vor. Es gibt zum Einen in der Lenksäule selbst eine teleskopierbare Kombination aus einem inneren und einem äußeren Mantelrohr, die eine Lenkwelle umgeben und die für die Axialverstellung der Lenksäule teleskopierbar ausgeführt sind. Außerdem ist die Lenkwelle selbst, die das Lenkdrehmoment des Fahrers auf das Lenkgetriebe überträgt, im Allgemeinen teleskopierbar ausgebildet. Hier wird ein etwa kleeblattförmiger Querschnitt, der zur Übertragung des Drehmoments geeignet ist, eingesetzt, so dass der innere Wellenteil und der äußere Wellenteil miteinander in Drehrichtung formschlüssig in Eingriff stehen. In beiden Fällen wird häufig eine Kunststoffhülse zwischen den beiden aus Metall gefertigten, zueinander verschiebbaren Bauelementen eingesetzt. Problematisch und aufwändig ist dabei bei der Fertigung dieser Verbindungen, dass das Kunststoffteil nicht unmittelbar als Bauteil eingesetzt werden kann und ohne weitere Bearbeitungsschritte die Anforderungen an Spielfreiheit und eine definierte Reibung bei der axialen Verschiebebewegung erfüllen kann.

In der DE 26 35 120 A1 wird eine Methode zur Herstellung einer Gleitverbindung einer Welle vorgestellt, bei der eine äußere Welle und eine innere Welle unter Zwischenschaltung einer Hülse vormontiert werden. Anschließend wird die äußere Welle nach innen verformt, und mit einer Schiebeoperation werden die Wellenteile zueinander kalibriert. Dabei erfolgt auch eine Erwärmung. Die Erwärmung kann mit einer Induktionsheizung, einer Gasflamme oder einer Berührungsheizung erfolgen, so dass der Kunststoff in eine plastische Fließbewegung gebracht wird. Als nachteilig stellen sich hierbei der erforderliche Zeitaufwand und die erforderliche thermische Energie zur Aufheizung der Wellenteile heraus. Auch das Endergebnis ist nicht in allen Fällen befriedigend, da die Wellenteile erwärmt werden und sich die Geometrie im Verbindungsbereich durch das Abkühlen der Wellenteile nach dem oben beschriebenen Vorgang wieder verändert.

In der US 9,452,444 B2 wird eine Methode zur Herstellung einer teleskopierbaren Welle vorgestellt, bei der die beiden Wellenteile, von denen eines der beiden Teile mit einem Kunststoff beschichtet ist, zunächst zusammengesetzt werden und dann eine Verschiebebewegung ausgelöst wird. Dabei wird die Verschiebekraft gemessen. Anschließend wird die Verschiebung solange fortgesetzt, bis eine gewünschte Verschiebekraft erreicht ist.

Die EP 2281731 B1 offenbart eine ähnliche Methode. Nachteilig sind hierbei die relativ hohen Kräfte, die zum Kalibrieren der Kunststoffschicht aufgewendet werden müssen. Auch die lange Prozessdauer der oszillierenden Verschiebebewegung und die aufwändigen apparativen Voraussetzungen sind nachteilig.

Aus der US 2014/041194 A1 ist ein ähnliches Verfahren mit oszillierenden Verschiebebewegungen bekannt. US 2014/041194 A1 offenbart insbesondere ein Verfahren zur Herstellung einer axial verschieblichen Verbindung zwischen zwei Wellenteilen, zwischen denen ein Kunststoff als Gleitmaterial angeordnet ist, mit folgenden Merkmalen: a) Bereitstellen der beiden zu fügenden Wellenteile, wobei wenigstens eines der beiden Wellenteile eine Kunststoffbeschichtung auf der dem anderen Wellenteil zugewandten Oberfläche aufweist, b) Zusammenfügen der Wellenteile zu einer Baugruppe, gegebenenfalls mit der Kunststoffhülse, mittels einer Presskraft in Axialrichtung, c) Einspannen der Baugruppe in eine Vorrichtung, bei der die beiden Wellenteile gespannt und in Axialrichtung mit einer Verschiebkraft beaufschlagt werden können, d) Anpressen eines Werkzeugs von einer Seite an das jeweils äußere Wellenteil und Abstützen des Wellenteils an einem Gegenhalter, e) Verschieben der Wellenteile in Axialrichtung hin und her, bis die Verschiebkraft oder die Verschiebegeschwindigkeit einen gewünschten Sollwert erreicht, f) entnehmen der Baugruppe aus der Vorrichtung.

Weiterhin sind in der DE 10 2015 216326 A1, der WO 2009/090018 A1 und der CN 203 996 397 U ähnliche Verfahren beschrieben.

Es ist deshalb Aufgabe der vorliegenden Erfindung, ein Verfahren bereitzustellen, mit dem die Prozesszeit verkürzt werden kann, ein geringerer Energieaufwand erforderlich ist und ein besseres Ergebnis erzielt werden kann. Diese Aufgabe wird von einem Verfahren mit den Merkmalen des Anspruchs 1 gelöst. Die Aufgabe wird im Einzelnen gelöst, weil bei dem Verfahren zur Herstellung einer axial verschieblichen Verbindung zwischen zwei Wellenteilen, zwischen denen ein Kunststoff als Gleitmaterial angeordnet ist, folgende Merkmale vorgesehen sind:
a) Bereitstellen der beiden zu fügenden Wellenteile, wobei entweder wenigstens eines der beiden Wellenteile eine Kunststoffbeschichtung auf der dem anderen Wellenteil zugewandten Oberfläche aufweist oder eine Kunststoffhülse zwischen den Wellenteilen vorgesehen ist,
b) Zusammenfügen der Wellenteile zu einer Baugruppe, gegebenenfalls mit der Kunststoffhülse, mittels einer Presskraft in Axialrichtung
c) Einspannen der Baugruppe in eine Vorrichtung, bei der die beiden Wellenteile gespannt und in Axialrichtung mit einer Verschiebkraft beaufschlagt werden können,
d) Anpressen einer Sonotrode von einer Seite an das jeweils äußere Wellenteil und Abstützen des Wellenteils an einem Gegenhalter,
e) Einleiten eines Ultraschallsignals in die Sonotrode und Verschieben der Wellenteile in Axialrichtung hin und her, bis die Verschiebkraft oder die Verschiebegeschwindigkeit einen gewünschten Sollwert erreicht,
f) Beenden des Ultraschallsignals und entnehmen der Baugruppe aus der Vorrichtung.

Dadurch wird eine schnellere und im Ergebnis präzisere Kalibrierung der Kunststoffhülse bzw. der Gleithülse bzw. der Kunststoffbeschichtung im Verschiebebereich der Wellenteile möglich.

Die Aufgabe einer solchen axial verschieblichen Verbindung zwischen zwei Wellenteilen, insbesondere zwei zylindrischen Wellenteilen, besteht darin, eine Verschiebbarkeit mit möglichst geringer Verschiebekraft bei gleichzeitig geringem Spiel zwischen den Wellenteilen darzustellen. Im Fall, dass die zylindrischen Wellenteile als Wellen ein Drehmoment übertragen sollen, soll zudem ein möglichst hohes Drehmoment sicher übertragen werden. Insbesondere in diesem Fall, wenn Drehmomente übertragen werden sollen, sind die Querschnittsflächen der zylindrischen Wellenteile abweichend von einer Kreisform ausgebildet. Es können dann beispielsweise entsprechende Rillen oder Verzahnungen oder Nuten vorgesehen sein. Bei der Auslegung einer solchen Verbindung wird eine maximal zulässige Kraft, die zur Darstellung einer Verschiebung der beiden Wellenteile gegeneinander erforderlich ist, festgelegt. Diese Kraft stellt dann den Sollwert für die gewünschte Verschiebekraft dar. Es kann auch vorgesehen sein, den Sollwert für die gewünschte Verschiebekraft auf einen Wert festzulegen, der 5%, bevorzugt 10%, unterhalb dem bei der Auslegung festgelegten maximal zulässigen Wert für die Verschiebekraft entspricht.

Der gewünschte Sollwert für die Verschiebegeschwindigkeit wird bestimmt, indem für eine vorgegebene Verschiebekraft, die oberhalb der maximal zulässigen Verschiebekraft liegt, in Versuchen ermittelt wird, bei welcher Geschwindigkeit der gewünschte Sollwert für die Verschiebekraft erreicht wird. Der Sollwert für die Geschwindindigkeit wird dann entsprechend festgelegt. Mit Vorteil kann ein Aufschlag auf den Sollwert von 5%, und mehr bevorzugt von 10%, vorgesehen sein.

Bevorzugt wird bei dem Verfahren ein Ultraschallsignals mit einer Frequenz im Bereich von 20kHz bis 35kHz in die Sonotrode eingeleitet. Dabei mehr bevorzugt wird ein Frequenzbereich von 25kHz bis 30kHz eingesetzt.

Dabei kann es von Vorteil sein, wenn die Frequenz des in die Sonotrode eingeleiteten Ultraschallsignals während des Prozessablaufs des Verfahrens variiert wird.

Vorzugsweise sind die Wellenteile ein Welleninnenteil und ein Wellenaußenteil, insbesondere eine innere Lenkwelle und eine äußere Lenkwelle einer Kraftfahrzeuglenkung. Es kann auch vorgesehen sein, dass die Wellenteile ein inneres Mantelrohr und ein äußeres Mantelrohr einer axial teleskopierbaren Kraftfahrzeuglenkung sind.

Wenn im Schritt d) zwei Sonotroden an das äußere Wellenteil angepresst werden, ist eine intensivere oder anders parametrierte Energieeinleitung möglich. Insbesondere können die beiden Sonotroden mit Ultraschallsignalen verschiedener Frequenzen beaufschlagt werden.

Darüberhinaus hat es sich gezeigt, dass auch mit Vorteil mehr als zwei Sonotroden eingesetzt werden können, um die Energieeinleitung noch weiter zu erhöhen. Dabei kann an jeder Sonotrode eine andere Frequenz oder ein anderer Frequenzverlauf über der Prozesszeit angewendet werden.

Auch die Ultraschallleistung kann für jede Sonotrode separat festgelegt sein. Auch dabei können Verläufe vorgesehen sein. So kann für eine kurze Anfangszeit von bis zu 3s eine hohe Leistung und dann für die übrige Prozesszeit eine niedrige Leistung vorgesehen sein. Dabei ist die niedrige Leistung mit Vorteil um 1/3 niedriger als die hohe Leistung.

Zur Darstellung des Verfahrens zur Herstellung der axial verschieblichen Verbindung kann die Verschiebung der beiden Wellenteile gegeneinander bevorzugt mit einem Pneumatikzylinder, gegebenenfalls mit einem Hydraulikzylinder, bewirkt werden. Durch den eingeleiteten Druck kann gut eine kraftgesteuerte Bewegung der eingespannten Baugruppe erfolgen. Dabei kann die Kraft auch für unterschiedliche Geschwindigkeiten der Bewegung gut eingestellt werden und die Verschiebegeschwindigkeit gemessen werden.

Bei einer Kraftfahrzeuglenkung mit einer teleskopierbaren Lenkwelle und/oder einer telekopierbaren Mantelrohreinheit, die nach einem oben beschriebenen Verfahren hergestellt ist, ergeben sich in der Fertigung kürzere mögliche Taktzeiten und ein geringerer Energieaufwand. Außerdem ist im Ergebnis die Kraftfahrzeuglenkung mit besseren Eigenschaften hinsichtlich Dauerhaltbarkeit, Spielfreiheit und Geräuschfreiheit versehen.

Nachfolgend werden Ausführungsbeispiele der Erfindung anhand der Zeichnung beschrieben. Es zeigen:
- Figur 1:: eine schematisch dargestellte Kraftfahrzeuglenkung;
- Figur 2-4:: eine untere Lenkwelle;
- Figur 5-6:: die Lenkwelle aus Figur 2-4 in einem Querschnitt;
- Figur 7:: die Lenkwelle aus Fig. 5-6 in einem Längsschnitt während der Kalibrierung der Kunststoffhülse;
- Figur 8-9:: eine andere Ausführungsform einer Lenkwelle;
- Figur 10:: eine andere Ausführungsform einer Lenkwelle, eine obere Lenkwelle;
- Figur 11:: eine Mantelrohreinheit;
- Figur 12-13:: das Mantelrohr in perspektivischer Darstellung;
- Figur 14:: das Mantelrohr aus Fig. 12-13 in einem Querschnitt;
- Figur 15:: das Mantelrohr aus Fig. 11-14 während der Kalibrierung der Kunststoffhülse; sowie
- Figur 16:: die Lenkwelle aus Fig. 5-6 in einem Längsschnitt während der Kalibrierung der Kunststoffhülse.

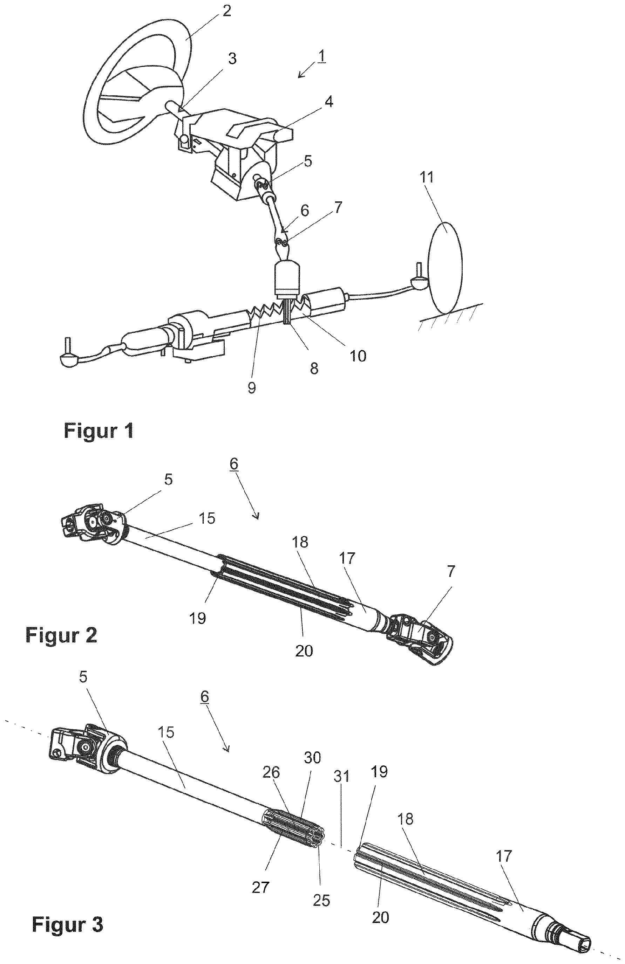

Die Figur 1 zeigt in einer schematischen Darstellung eine Kraftfahrzeuglenkung 1 mit einem Lenkrad 2, das drehfest mit einer oberen Lenkwelle 3 verbunden ist. Die obere Lenkwelle 3 ist in einer Konsole 4 höhenverstellbar und axialverstellbar gelagert. Über ein Kardangelenk 5 ist die obere Lenkwelle schwenkbar, aber drehfest mit einer unteren Lenkwelle 6 verbunden. Die untere Lenkwelle 6 ist schließlich über ein zweites Kardangelenk 7 mit einem Ritzel 8 verbunden, das in ein Zahnstangensegment 9 einer Zahnstange 10 eingreift.

Eine Drehbewegung des Lenkrads 2 führt somit zu einer Verschiebung der Zahnstange 10 und in bekannter Weise zu einer Verschwenkung von gelenkten Rädern 11 des Kraftfahrzeugs, wodurch eine Lenkbewegung und Fahrtrichtungsänderung bewirkt wird.

Die untere Lenkwelle 6 ist in Figur 2 detaillierter dargestellt. Gleiche oder funktionsgleiche Bauelemente tragen in den folgenden Figuren dieselben Bezugsziffern.

Die untere Lenkwelle 6 ist mit dem ersten Kardangelenk 5 und dem zweiten Kardangelenk 7 versehen. Das obere, erste Kardangelenk 5 ist drehfest mit einem Welleninnenteil 15 verbunden, während das zweite Kardangelenk 7 mit einem Wellenaußenteil 17 drehfest verbunden ist. Das Wellenaußenteil 17 weist eine rotationssymmetrische umlaufende Struktur 18 auf, die sich bis zu einem freien Ende 19 des äußeren Wellenteils 17 erstreckt. Die Struktur 18 besteht aus geraden Rillen 20, die von außen in das Wellenteil 17 eingeprägt sind. Die Rillen 20 verlaufen achsparallel und verleihen dem Wellenteil 17 im Querschnitt eine etwa sternförmige Struktur.

In der Figur 3 ist die untere Lenkwelle 6 aus den Figuren 1 und 2 in einer perspektivischen Ansicht dargestellt, in der das Welleninnenteil 15 und das Wellenaußenteil 17 auseinander gezogen sind. Hier ist erkennbar, dass das Welleninnenteil 15 an seinem freien Ende 25 einen Bereich 26 aufweist, der eine von einem kreisrunden Querschnitt abweichende Gestalt aufweist. Der Querschnitt dieses Bereichs 26 ist ebenfalls durch Rillen oder Nuten gekennzeichnet, die eine sternförmige Querschnittsgestalt ergeben, welche zu dem freien inneren Querschnitt des Wellenaußentals 17 passen. Dies wird weiter unten genauer beschrieben. In der Darstellung der Figur 3 trägt das Welleninnenteil 15 in dem Bereich 26 eine Kunststoffhülse 30, die in der Querschnittsgestalt dem Bereich 26 angepasst ist.

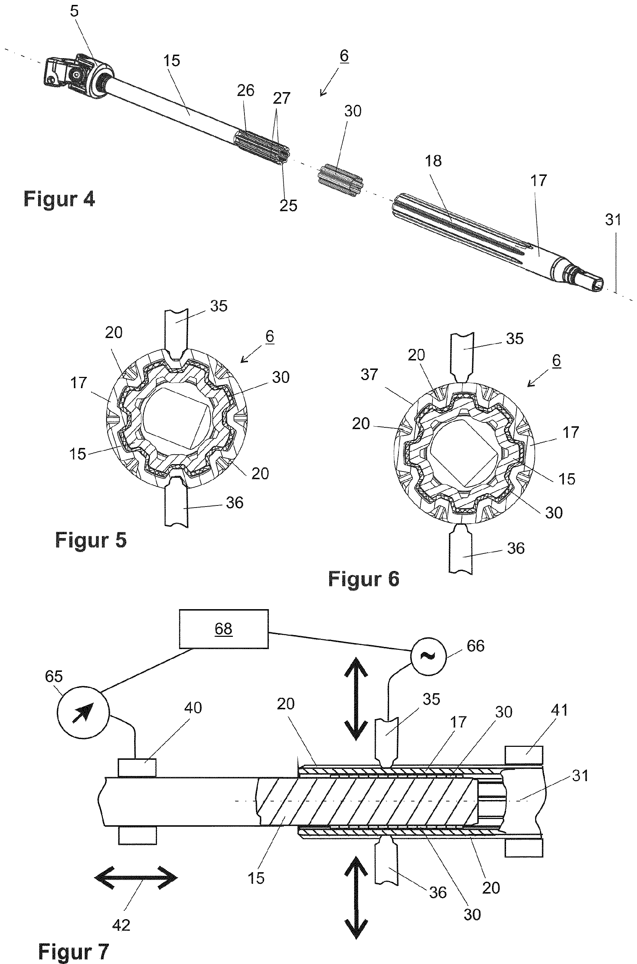

Dies wird in Figur 4 deutlicher. Die Figur 4 zeigt die untere Lenkwelle 6 in einer Darstellung entsprechend Figur 3, wobei jedoch die Kunststoffhülse 30 von dem Bereich 26 des Welleninneneils 15 abgenommen ist. Die Längsachse und Symmetrieachse 31 stellt auch hier die Axialrichtung dar, in der die untere Lenkwelle 6 teleskopierbar ausgebildet ist.

Die Profilierung der unteren Lenkwelle 6 in den Bereichen, in denen das Welleninnenteil 15 und das Wellenaußenteil 17 überlappen und in denen die Kunststoffhülse 30 zwischen diesen beiden Wellenteilen angeordnet ist, ergibt bei geeigneter Ausführung eine drehfeste, aber in Richtung der Längsachse 31 teleskopierbare Verbindung. Im Falle der unteren Lenkwelle 6 ist eine solche teleskopierbare Verbindung vorteilhaft, da das Lenkgetriebe mit der Zahnstange 10 im Bereich der Vorderachse des Kraftfahrzeugs eingebaut ist, während die Lenksäule 1 etwa im Bereich des Armaturenträgers an der Karosserie befestigt ist. Relativbewegungen dieser Befestigungspunkte sind im Fahrbetrieb des Kraftfahrzeugs unvermeidbar. Diese Relativbewegungen werden durch die dargestellte Konstruktion der unteren Lenkwelle 6 aufgenommen. Dabei ist es für die Funktion und den Fahrkomfort wichtig, dass die Verbindung zwischen den beiden Wellenteilen dauerhaft spielfrei und dennoch reibungsarm funktioniert. Hierfür ist eine genaue Anpassung der Kunststoffhülse 30 an die beiden Profilierungen auf ihrer Innenseite und der Außenseite erforderlich. Das erfindungsgemäße Verfahren, das diese Anpassung in besonders vorteilhafter Weise ermöglicht, wird nachfolgend näher beschrieben.

Die Figur 5 zeigt die untere Lenkwelle 6 in einem Querschnitt in dem profilierten Bereich, schematisiert in einer Montagesituation. Das Welleninnenteil 15 und das Wellenaußenteil 17 sind in ihrem zusammen passenden, profilierten Bereich ineinander geschoben. Zwischen der inneren Oberfläche des Wellenaußenteils 17 und der äußeren Oberfläche des Welleninnenteils 15 befindet sich die Kunststoffhülse 30, die dort spielfrei sitzt. Um die Spielfreiheit zu gewährleisten, ist die Kunststoffhülse 30 mit einem Übermaß versehen, so dass der Sitz der beiden Wellenteile ineinander zunächst eine hohe Reibung aufweist. Im Betrieb würde sich diese hohe Reibung durch unerwünschte Kräfte und auch durch Geräuschentwicklung auf Grund des Stick-Slip-Effekts nachteilig bemerkbar machen. Zur Anpassung oder Kalibrierung der Kunststoffhülse 30 an die genauen Abmessungen der beiden Wellenteile ist während der Fertigung vorgesehen, eine Sonotrode 35 in einer Radialrichtung auf das Wellenaußenteil 17 aufzusetzen. Ein Amboss 36 wird auf der gegenüberliegenden Seite des Wellenaußenteils 17 angesetzt. Das Wellenaußenteil 17 wird dadurch fest zwischen der Sonotrode 35 und dem Amboss 36 eingespannt.

Die Figur 6 zeigt eine ähnliche Anordnung wie die Figur 5. In der Figur 6 ist abweichend von Figur 5 vorgesehen, dass die Sonotrode 35 und der Amboss 36 nicht in die Rillen 20 des Wellenaußenteils 17 eingesetzt werden, sondern auf zwischen den Rillen 20 ausgebildeten Außenflächen 37 aufgesetzt werden.

Die Figur 7 zeigt nun in einem Längsschnitt die Ausführung nach Figur 5, wobei wieder die Sonotrode 35 und der Amboss 36 in jeweils eine Rille 20 des Wellenaußenteils 17 eingesetzt sind. Das Welleninnenteil 15 ist in die Kunststoffhülse 30 und das Wellenaußenteil 17 eingesetzt. Beide Wellenteile werden nun von Spannzangen 40 und 41 erfasst. Eine Steuerungs- und Auswerteeinheit 68 übernimmt die Prozessführung. Die Sonotrode 35 wird von einer Steuerung 66 angesteuert, um eine Ultraschallschwingung auf das äußere Wellenteil 17 zu übertragen. Das äußere Wellenteil 17 wird dadurch in eine mechanische Schwingung versetzt Da das Wellenaußenteil 17 selbst relativ frei schwingt, wird die Schwingungsenergie zu einem großen Teil auf die Kunststoffhülse 30 übertragen, die dadurch mit hoher Frequenz verformt wird. Die Kunststoffhülse 30 erwärmt sich dabei. Gleichzeitig wird durch eine Relativbewegung in Richtung des Doppelpfeils 42 mittels der Spannzangen 40 und 41 der Welleninnenteil 15 in Axialrichtung hin- und herbewegt. Die erwärmte Kunststoffhülse 30 passt sich dabei den beiden einander zugewandten Oberflächen des Welleninnenteils 15 und des Wellenaußenteils 17 an. Der Anpassungsvorgang kann dadurch kontrolliert werden, dass die von den Spannzangen 40 und 41 aufzubringende Verschiebekraft bei der Hin- und Herbewegung gemessen wird. Hierzu kann ein Kraftaufnehmer 65 vorgesehen sein. Vorzugsweise wird die Erhitzung der Kunststoffhülse 30 mittels Ultraschall ebenso wie die Bewegung in Richtung des Doppelpfeils 42 so lange ausgeführt, bis eine vorgesehene maximale Verschiebekraft unterschritten wird. Der Anpassungsvorgang ist dann abgeschlossen. Nach Abschalten der Anregung des Sonotrode 35 kühlt sich die Kunststoffhülse 30 schnell ab, da die beiden Wellenteile 15 und 17 durch die Ultraschallanregung im Wesentlichen nicht selbst erwärmt wurden und somit gegenüber der Kunststoffhülse 30 kalt sind. Dies fördert die Maßhaltigkeit der so kalibrierten Kunststoffhülse 30. Hinzu kommt, dass das Wellenaußenteil 17 und das Welleninnenteil 15 bei diesem Vorgang praktisch keine thermischen Änderungen ihrer Abmessungen erfahren. Im Gegensatz dazu wurde bei konventionellen Verfahren das Wellenaußenteil erhitzt und kühlte sich nach dem Kalibrierungsvorgang wieder ab, wodurch die erzielbare Präzision des Kalibriervorgangs der Kunststoffhülse 30 eingeschränkt ist.

Die Aufwärm- und Abkühlzeiten des beschriebenen Vorgangs sind auf Grund der geringen zu erwärmenden Masse der Kunststoffhülse 30 kurz, so dass eine kurze Taktzeit erzielbar ist. Weiters genügt es, die Kunststoffhülse nur an der Oberfläche soweit zu erwärmen, dass sie sich gut einformen kann.

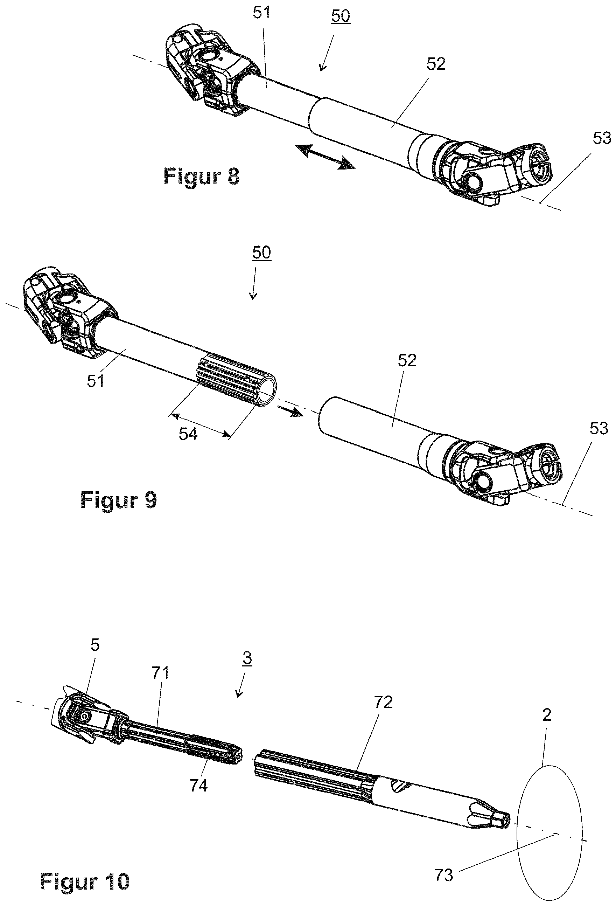

Das oben beschriebene Verfahren ist nicht nur auf profilierte Wellen wie die untere Lenkwelle 6, bei der sowohl das Welleninnenteil 15 als auch das Wellenaußenteil 17 profiliert sind, anwendbar. So zeigen die Figuren 8 und 9 eine andere Ausführungsform einer teleskopierbaren Lenkwelle 50 mit einem Welleninnenteil 51 und einem Wellenaußenteil 52, die in Richtung einer Längsachse 53 teleskopierbar ineinander gefügt sind. Das Welleninnenteil 51 weist einen endseitigen Bereich 54 auf, der oberflächenbeschichtet ist. Zur Kalibrierung dieser Oberflächenbeschichtung im oben genannten Sinne kann das im Zusammenhang mit den Figuren 5 bis 7 beschriebene Verfahren auch auf eine solche Welle angewendet werden.

Es ist jedoch noch anzumerken, dass eine derartig in ihrer Länge teleskopierbare Verbindung auch im Falle der oberen Lenkwelle 3 sinnvoll sein kann, wie dies in Figur 10 dargestellt ist. Im Falle, dass das Lenkrad 2 verschiebbar zur Konsole 4 ist, werden auch für die obere Lenkwelle derartige teleskopierbare Verbindungen eingesetzt. Alle anhand der unteren Lenkwelle 6 dargestellten Varianten und Ausführungsformen sind in gleicher Weise auch für die obere Lenkwelle 3 anwendbar. Entsprechend kann die obere Lenkwelle 3 eine innere Lenkwelle 71 und eine äussere Lenkwelle 72 unter Zwischenschaltung einer Hülse 74 aufweisen und in Richtung einer Längsachse 73 teleskopierbar ineinander gefügt sein. Zur Kalibrierung dieser Verbindung kann das anhand der Figuren 5 bis 7 beschriebene Verfahren auch auf die obere Lenkwelle 3 angewendet werden.

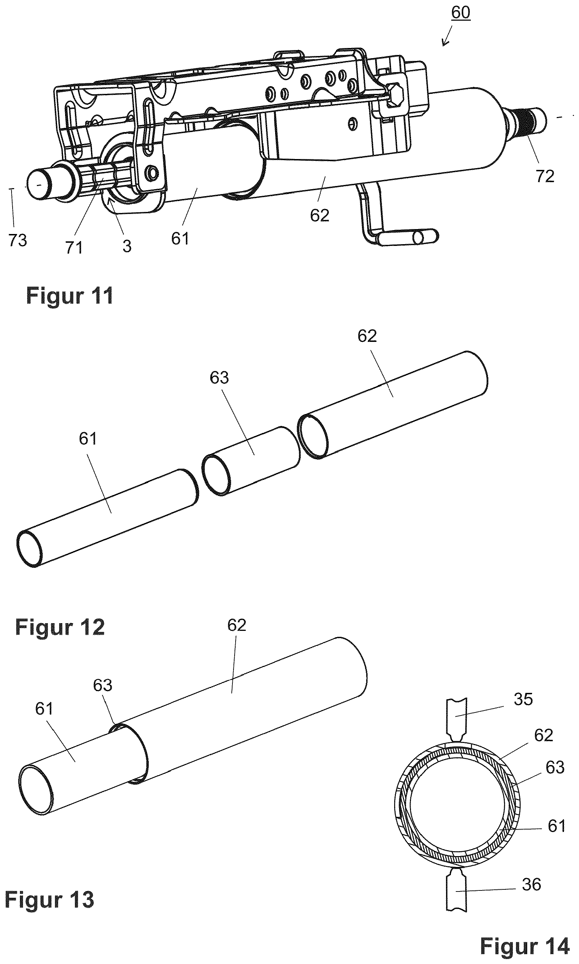

In den Figuren 11 bis 15 ist ein Beispiel für eine teleskopierbare Mantelrohreinheit 60 dargestellt. Die teleskopierbare Mantelrohreinheit 60 weist die obere Lenkwelle 3 auf, die oben zu Figur 1 und Figur 10 beschrieben wurde. Die obere Lenkwelle 3 ist in einem inneren Mantelrohr 61 und einem äußeren Mantelrohr 62 gelagert. Zur Axialverstellung der Lenksäule sind dabei das innere Wellenteil 71 und das äussere Wellenteil 72 der obere Lenkwelle 3 in ihrer Längsachse 73 verschiebbar ausgebildet, wie dies anhand der Figur 10 erläutert wurde. Weiter ist zur Axialverstellung der Lenksäule das innere Mantelrohr 61 gegenüber dem äußeren Mantelrohr 62 in Axialrichtung, die der Längsrichtung der Längsachse 73 entspricht, verschiebbar ausgebildet. Zwischen dem inneren Mantelrohr 61 und dem äußeren Mantelrohr 62 ist eine Gleithülse 63 vorgesehen, die in Figur 12 separat dargestellt ist. Die Gleithülse 63 sitzt zwischen dem inneren Mantelrohr 61 und dem äußeren Mantelrohr 62, wie dies in der Figur 13 erkennbar ist. Es handelt sich bei dem inneren Mantelrohr 61 und dem äußeren Mantelrohr 62 im technischen Sinne nicht um Wellen, da diese einen kreisrunden Querschnitt aufweisen und keine Drehmomente übertragen können. Es ist dennoch aus den oben genannten Gründen vorteilhaft, wenn der Sitz der beiden Mantelrohrteile im Bereich der Gleithülse 63 spielfrei und dennoch leichtgängig ist. Zu diesem Zweck wird das zu Figur 7 beschriebene Verfahren auch zur Kalibrierung der Gleithülse 63 zwischen dem inneren Mantelrohr 61 und dem äußeren Mantelrohr 62 angewendet. Dies ist in der Figur 14 veranschaulicht. Die Sonotrode 35 wird außen auf das äußere Mantelrohr 62 aufgesetzt, welches sich auf dem gegenüber platzierten Amboss 36 abstützt. Sodann wird wieder die Sonotrode 35 von einer Steuerung 66 mit elektrischer Spannung einer bestimmten Frequenz oder einem Frequenzverlauf angesteuert. Die Schwingungsenergie führt wiederum zu einer Erwärmung der Gleithülse 63.

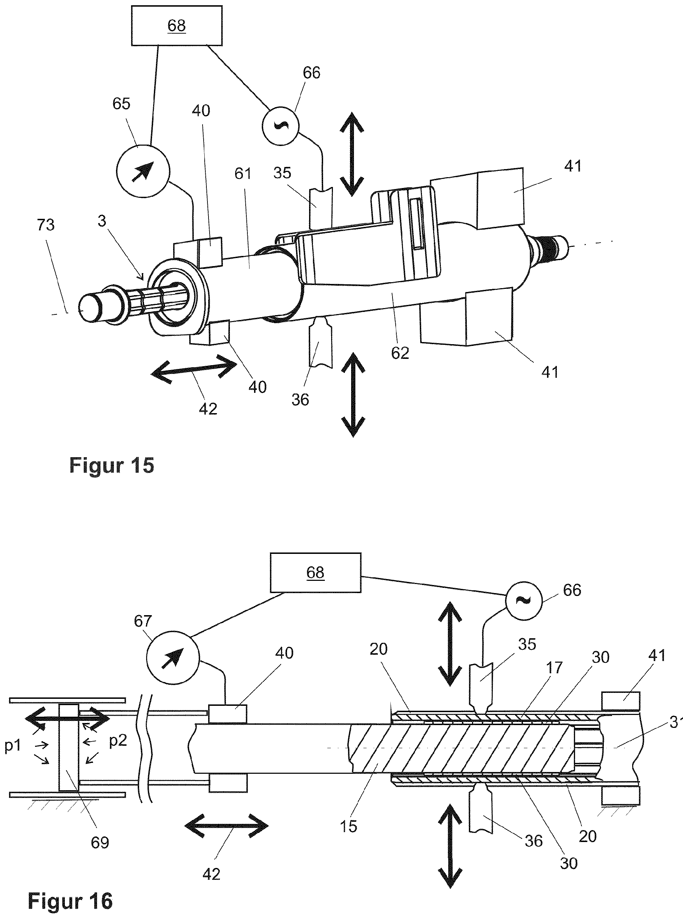

In der Figur 15 ist veranschaulicht, dass während des Vorgangs das innere Mantelrohr 61 zwischen Spannbacken 40 eingespannt ist, während das äußere Mantelrohr 62 zwischen Spannbacken 41 eingespannt ist. Während die Gleithülse 63 erwärmt wird, wird das innere Mantelrohr 61 in Richtung des Doppelpfeils 42 hin- und herbewegt. Die dafür erforderliche Verschiebekraft F wird mit einem Kraftaufnehmer 65 erfasst. Die Verschiebekraft F sinkt mit der Anzahl der Hubbewegungen in Richtung des Doppelpfeils 42. Sobald ein bestimmter Schwellwert erreicht oder unterschritten wird, ist die Kalibrierung der Gleithülse 63 abgeschlossen. Die Steuerung des Prozesses erfolgt wiederum über die Steuerungs- und Auswerteeinheit 68. Die so bearbeitete Mantelrohreinheit 60 wird dann aus den Spannzangen 40 und 41 genommen, der Amboss 36 und die Sonotrode 35 werden entfernt, und das Mantelrohr kann in eine Konsole 4 entsprechend Figur 1 eingebaut werden. Wie in Figur 10 ist bei diesem Ausführungsbeispiel dargestellt, dass die obere Lenkwelle 3, die in dem teleskopierbaren Mantelrohr gelagert ist, ebenfalls eine Schiebeverbindung aufweist, wobei die Schiebeverbindung den Ausführungsbeispielen aus den Figuren 2 bis 9 entsprechen kann und zur Übertragung von Drehmomenten eingerichtet ist.

Alternativ oder in Kombination zum Einsatz eines Kraftaufnehmers 65 kann ein Geschwindigkeitsaufnehmer 67 vorgesehen sein, der auch als Wegaufnehmer ausgebildet sein kann, wobei die Geschwindigkeit in einer Steuerungs- und Auswerteeinrichtung 68 bestimmt wird. Dies ist in Figur 16 veranschaulicht.

Die Figur 16 zeigt analog zur Figur 7 in einem Längsschnitt die Ausführung nach Figur 5, wobei wieder die Sonotrode 35 und der Amboss 36 in jeweils eine Rille 20 des Wellenaußenteils 17 eingesetzt sind. Das Welleninnenteil 15 ist in die Kunststoffhülse 30 und das Wellenaußenteil 17 eingesetzt. Beide Wellenteile werden nun von Spannzangen 40 und 41 erfasst. Die Spannzange 41 wird stationär gehalten, während die Spannzange 40 durch einen Pneumatikzylinder mit einer Bewegung beaufschlagt werden kann. Eine Steuerungs- und Auswerteeinheit 68 übernimmt die Prozessführung. Die Sonotrode 35 wird von einer Steuerung 66 angesteuert, um eine Ultraschallschwingung auf das äußere Wellenteil 17 zu übertragen. Das äußere Wellenteil 17 wird dadurch in eine mechanische Schwingung versetzt. Da das Wellenaußenteil 17 selbst relativ frei schwingt, wird die Schwingungsenergie zu einem großen Teil auf die Kunststoffhülse 30 übertragen, die dadurch mit hoher Frequenz verformt wird. Die Kunststoffhülse 30 erwärmt sich dabei. Gleichzeitig wird durch eine Relativbewegung in Richtung des Doppelpfeils 42 mittels der Spannzangen 40 und 41 der Welleninnenteil 15 in Axialrichtung hin- und herbewegt. Dazu werden die Drücke p1 und p2 abwechselnd erhöht und abgesenkt, so dass der Kolben 69 hin und her bewegt wird. Der Kolben 69 ist entsprechend mechanisch mit der Spannzahnge 40 gekoppelt. Die erwärmte Kunststoffhülse 30 passt sich dabei den beiden einander zugewandten Oberflächen des Welleninnenteils 15 und des Wellenaußenteils 17 an. Der Anpassungsvorgang kann dadurch kontrolliert werden, dass die Geschwindigkeit, mit der die Spannzange 40 bewegt wird mit einem Wegsensor oder einem Geschwindigkeitssensor 67 erfasst wird. Vorzugsweise wird die Erhitzung der Kunststoffhülse 30 mittels Ultraschall ebenso wie die Bewegung in Richtung des Doppelpfeils 42 so lange ausgeführt, bis der Maximalwert der Verschiebegeschwindigkeit einen vorgesehenen minimalen Sollwert überschreitet. Der Anpassungsvorgang ist dann abgeschlossen. Diese Verfahrensfolge bietet ebenfalls die bereits genannten Vorteile.

Der Ablauf der oben beschriebenen Vorgänge sieht also als Ausführungsbeispiel folgende teilweise optionale Prozessschritte vor:
- Bereitstellung der beiden zu fügenden Wellenteile, wobei
- entweder wenigstens eines der beiden Wellenteile eine Kunststoffbeschichtung auf der dem anderen Wellenteil zugewandten Oberfläche aufweist,
- oder eine Kunststoffhülse zur Anlage zwischen den Wellenteilen vorgesehen ist,
- Zusammenfügen der Wellenteile, gegebenenfalls mit der Kunststoffhülse dazwischen,
- wobei die Wellenteile und gegebenenfalls die Kunststoffhülse so ausgebildet sind, dass das Zusammenfügen nur unter Überwindung einer Presskraft erfolgen kann, da der Schiebesitz mit einem Übermaß ausgebildet ist,
- Einspannen der Baugruppe in eine Vorrichtung, bei der die beiden Wellenteile gespannt und in Axialrichtung mit einer Verschiebkraft beaufschlagt werden können. Die Vorrichtung ist vorzugsweise so ausgerüstet, dass eine Verschiebekraft gemessen werden kann.
- Anpressen einer Sonotrode von einer Seite an das jeweils äußere Wellenteil und Abstützen des Innenteils an einem Gegenhalter (Amboss),
- Einleiten eines Ultraschallsignals in die Sonotrode und Verschieben der Wellenteile in Axialrichtung hin und her, bis die Verschiebkraft einen gewünschten Sollwert erreicht. Alternativ kann das Verfahren so ausgeführt werden, dass mit einer konstanten Kraft die Wellenteile gegeneinander verschoben werden und die Verschiebegeschwindigkeit gemessen wird. Dann wird der Vorgang beendet, wenn eine bestimmte Verschiebegeschwindigkeit erreicht wird.
- Nach Beendigung des Vorgangs wird die Welle als fertiges Bauteil aus der Vorrichtung entnommen und weiter verbaut.

## Patentansprüche

1. Verfahren zur Herstellung einer axial verschieblichen Verbindung zwischen zwei Wellenteilen, zwischen denen ein Kunststoff als Gleitmaterial angeordnet ist, mit folgenden Merkmalen:
a) Bereitstellen der beiden zu fügenden Wellenteile, wobei entweder wenigstens eines der beiden Wellenteile eine Kunststoffbeschichtung auf der dem anderen Wellenteil zugewandten Oberfläche aufweist oder eine Kunststoffhülse zwischen den Wellenteilen vorgesehen ist,
b) Zusammenfügen der Wellenteile zu einer Baugruppe, gegebenenfalls mit der Kunststoffhülse, mittels einer Presskraft in Axialrichtung,
c) Einspannen der Baugruppe in eine Vorrichtung, bei der die beiden Wellenteile gespannt und in Axialrichtung mit einer Verschiebkraft beaufschlagt werden können,
d) Anpressen einer Sonotrode von einer Seite an das jeweils äußere Wellenteil und Abstützen des Wellenteils an einem Gegenhalter,
e) Einleiten eines Ultraschallsignals in die Sonotrode und Verschieben der Wellenteile in Axialrichtung hin und her, bis die Verschiebkraft oder die Verschiebegeschwindigkeit einen gewünschten Sollwert erreicht,
f) Beenden des Ultraschallsignals und entnehmen der Baugruppe aus der Vorrichtung.

2. Verfahren nach einem der vorhergehenden Ansprüche, **dadurch gekennzeichnet, dass** die Frequenz des in die Sonotrode eingeleiteten Ultraschallsignals im Bereich von 20 bis 35kHz liegt.

3. Verfahren nach einem der vorhergehenden Ansprüche, **dadurch gekennzeichnet, dass** die Frequenz des in die Sonotrode eingeleiteten Ultraschallsignals während des Prozessablaufs des Verfahrens variiert wird.

4. Verfahren nach einem der vorhergehenden Ansprüche, **dadurch gekennzeichnet, dass** die Wellenteile ein Welleninnenteil und ein Wellenaußenteil, insbesondere eine innere Lenkwelle und eine äußere Lenkwelle einer Kraftfahrzeuglenkung sind.

5. Verfahren nach einem der vorhergehenden Ansprüche, **dadurch gekennzeichnet, dass** die Wellenteile ein inneres Mantelrohr und ein äußeres Mantelrohr einer axial teleskopierbaren Kraftfahrzeuglenkung sind.

6. Verfahren nach einem der vorhergehenden Ansprüche, **dadurch gekennzeichnet, dass** im Schritt d) zwei Sonotroden an das äußere Wellenteil angepresst werden.

7. Verfahren nach Anspruch 6, **dadurch gekennzeichnet, dass** die beiden Sonotroden mit Ultraschallsignalen verschiedener Frequenzen beaufschlagt werden.

## Claims

1. A method for producing an axially movable connection between two shaft pieces, between which a plastic is arranged as a sliding material, having the following features:
a) providing the two shaft pieces to be joined, wherein either at least one of the two shaft pieces has a plastic coating on the surface facing toward the other component or a plastic sleeve is provided between the shaft pieces,
b) joining the shaft pieces to form a unit, optionally with the plastic sleeve, by means of a pressing force in the axial direction,
c) clamping the unit in a device in which the two shaft pieces can be clamped and subjected to a displacement force in the axial direction,
d) pressing a sonotrode from one side against the respectively outer component and bracing the shaft piece against a counter-holder,
e) injecting an ultrasound signal into the sonotrode and moving the shaft pieces back and forth in the axial direction until the displacement force or the displacement velocity reaches a desired target value,
f) ending the ultrasound signal and removing the unit from the device.

2. The method as claimed in one of the preceding claims,
**characterized in that** the frequency of the ultrasound signal injected into the sonotrode lies in the range of 20 to 35 kHz.

3. The method as claimed in one of the preceding claims,
**characterized in that** the frequency of the ultrasound signal injected into the sonotrode is varied during the course of the process of the method.

4. The method as claimed in one of the preceding claims,
**characterized in that** the shaft pieces are an inner shaft piece and an outer shaft piece, especially an inner steering shaft and an outer steering shaft of a motor vehicle steering system.

5. The method as claimed in one of the preceding claims,
**characterized in that** the shaft pieces are an inner casing tube and an outer casing tube of an axially telescopic motor vehicle steering system.

6. The method as claimed in one of the preceding claims,
**characterized in that** two sonotrodes are pressed against the outer shaft piece in step d).

7. The method as claimed in claim 6, **characterized in that** the two sonotrodes are injected with ultrasound signals of different frequencies.

## Revendications

1. Procédé de fabrication d'une liaison coulissant axialement entre deux parties d'arbre, entre lesquelles est agencée une matière plastique en tant que matériau de glissement, avec les caractéristiques suivantes :
a) la fourniture des deux parties d'arbre à assembler, au moins l'une des deux parties d'arbre présentant un revêtement en matière plastique sur la surface tournée vers l'autre partie d'arbre ou une gaine en matière plastique étant prévue entre les parties d'arbre,
b) l'assemblage des parties d'arbre en un sous-ensemble, éventuellement avec la gaine en matière plastique, au moyen d'une force de pression dans la direction axiale,
c) le serrage du sous-ensemble dans un dispositif, dans lequel les deux parties de l'arbre peuvent être serrées et soumises à une force de coulissement dans la direction axiale,
d) la pression d'une sonotrode d'un côté contre la partie d'arbre extérieure respective, et le support de la partie d'arbre sur un contre-appui,
e) l'introduction d'un signal ultrasonore dans la sonotrode et le coulissement des parties d'arbre en va-et-vient dans la direction axiale jusqu'à ce que la force de coulissement ou la vitesse de coulissement atteigne une valeur de consigne souhaitée,
f) l'arrêt du signal ultrasonore et le retrait du sous-ensemble du dispositif.

2. Procédé selon l'une quelconque des revendications précédentes, **caractérisé en ce que** la fréquence du signal ultrasonore introduit dans la sonotrode se situe dans la plage allant de 20 à 35 kHz.

3. Procédé selon l'une quelconque des revendications précédentes, **caractérisé en ce que** la fréquence du signal ultrasonore introduit dans la sonotrode est modifiée pendant le déroulement du procédé.

4. Procédé selon l'une quelconque des revendications précédentes, **caractérisé en ce que** les parties d'arbre sont une partie intérieure d'arbre et une partie extérieure d'arbre, notamment un arbre de direction intérieur et un arbre de direction extérieur d'une direction de véhicule automobile.

5. Procédé selon l'une quelconque des revendications précédentes, **caractérisé en ce que** les parties d'arbre sont un tube d'enveloppe intérieur et un tube d'enveloppe extérieur d'une direction de véhicule automobile axialement télescopique.

6. Procédé selon l'une quelconque des revendications précédentes, **caractérisé en ce que** dans l'étape d), deux sonotrodes sont pressées contre la partie d'arbre extérieure.

7. Procédé selon la revendication 6, **caractérisé en ce que** les deux sonotrodes sont soumises à des signaux ultrasonores de différentes fréquences.
